# EUROPEAN PATENT APPLICATION

(11) **EP 4 464 877 A1**
(43) Date of publication of application: **20.11.2024**
(21) Application number: 23759719.0
(22) Date of filing: 10.02.2023
(51) Int. Cl.: F01M 13/02, F01M 13/00, F02D 19/02, F02D 19/06

(54) **INTERNAL COMBUSTION ENGINE**

(30) Priority: 28.02.2022 JP 2022028884
(71) Applicant: MITSUBISHI HEAVY INDUSTRIES ENGINE & TURBOCHARGER, LTD., Sagamihara-shi, Kanagawa 252-5293 (JP)
(72) Inventor: MURATA, Satoru, Tokyo 100-8332 (JP); ENDO, Hiroyuki, Sagamihara-shi, Kanagawa 252-5293 (JP); TODA, Masaki, Sagamihara-shi, Kanagawa 252-5293 (JP); WATANABE, Sota, Sagamihara-shi, Kanagawa 252-5293 (JP); IMAMORI, Yusuke, Tokyo 100-8332 (JP); TAKEMOTO, Daisuke, Tokyo 100-8332 (JP); NOMURA, Kazutoshi, Tokyo 100-8332 (JP)
(74) Representative: Studio Torta S.p.A.
(86) International application number: PCT/JP2023/004515
(87) International publication number: WO 2023/162715

(57) **Abstract**

One aspect of an internal combustion engine according to this disclosure is an internal combustion engine capable of burning a fuel containing hydrogen gas, comprising: a cylinder block containing at least one cylinder and including a crankcase which contains a crank shaft disposed below the cylinder; a rocker cover which defines an upper space covering an upper portion of a cylinder head disposed above the cylinder block; a ventilation gas inlet formed in the crankcase; a gas passage forming part which forms a gas passage connecting a crank chamber of the crankcase and the upper space of the rocker cover; and a discharged gas outlet formed in an upper portion of the rocker cover.

## Description

### TECHNICAL FIELD

The present disclosure relates to an internal combustion engine.

The present application claims priority based on Japanese Patent Application No. 2022-028884 filed February 28, 2022, the entire content of which is incorporated herein by reference.

### BACKGROUND ART

In a four-stroke engine (e.g., gasoline engine, gas engine, etc.), compression process, ignition and combustion process, expansion process, etc., are performed to extract work, but it is known that a small amount of gas containing unburned components (blow-by gas) leaks from the piston ring into the crank chamber during the compression process. If blow-by gas leaks into the crank chamber, the pressure in the crank chamber increases and the unburned gas leaking into the crank chamber may ignite, so an air release valve called a breather is usually installed in the crankcase.

When a fuel containing hydrogen gas is used as fuel, since hydrogen gas has a wider flammable range and can ignite more easily than other fuels such as natural gas or gasoline, it is necessary to improve the ventilation efficiency to prevent hydrogen gas from remaining inside the engine.

Patent Document 1 discloses a ventilation device that prevents ignition of hydrogen gas accumulated inside the crankcase when a fuel containing hydrogen gas is used. In this device, the crankcase is connected to an outside air intake path and a ventilation flow path equipped with a ventilation fan. By driving the ventilation fan to introduce the outside air into the crank chamber through the outside air intake path and forcibly discharge the gas in the crank chamber through the ventilation flow path, the hydrogen gas concentration in the crank chamber is kept below the lower limit of the flammable range to prevent ignition of hydrogen gas in the crank chamber.

### Citation List

### Patent Literature

Patent Document 1: JP2021-127704A

### SUMMARY

### Problems to be Solved

The ventilation device disclosed in Patent Document 1 requires equipment such as a ventilation fan in the crankcase, which is costly and requires space for installation of the ventilation fan and auxiliary power to drive the ventilation fan.

The present disclosure was made in view of the above circumstances, and an object thereof is to achieve a low-cost ventilation system that can reduce the installation space for the ventilation device and the power required for the ventilation device.

### Solution to the Problems

In order to achieve the above-described object, one aspect of the internal combustion engine of the present disclosure is an internal combustion engine capable of burning a fuel containing hydrogen gas, including: a cylinder block containing at least one cylinder and including a crankcase which contains a crank shaft disposed below the cylinder; a rocker cover which defines an upper space covering an upper portion of a cylinder head disposed above the cylinder block; a ventilation gas inlet formed in the crankcase; a gas passage forming part which forms a gas passage connecting a crank chamber of the crankcase and the upper space of the rocker cover; and a discharged gas outlet formed in an upper portion of the rocker cover.

### Advantageous Effects

According to one aspect of the internal combustion engine of the present disclosure, when blow-by gas containing hydrogen gas accumulated in the crank chamber of the engine is discharged to the outside to prevent ignition, the ventilation efficiency of the gas containing hydrogen gas can be improved, and at the same time, the installation space and power required for the ventilation device can be reduced to save costs.

### BRIEF DESCRIPTION OF DRAWINGS

FIG. 1 is a longitudinal cross-sectional view of an internal combustion engine according to an embodiment.
FIG. 2 is a schematic cross-sectional view showing the shape of the rocker cover according to an embodiment.
FIG. 3 is a schematic plan view seen from the direction of arrow A in FIG. 2.
FIG. 4 is a perspective view of the internal combustion engine according to an embodiment.
FIG. 5 is a longitudinal cross-sectional view of the internal combustion engine according to an embodiment.

### DETAILED DESCRIPTION

Embodiments of the present invention will now be described in detail with reference to the accompanying drawings. It is intended, however, that unless particularly identified, dimensions, materials, shapes, relative positions, and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

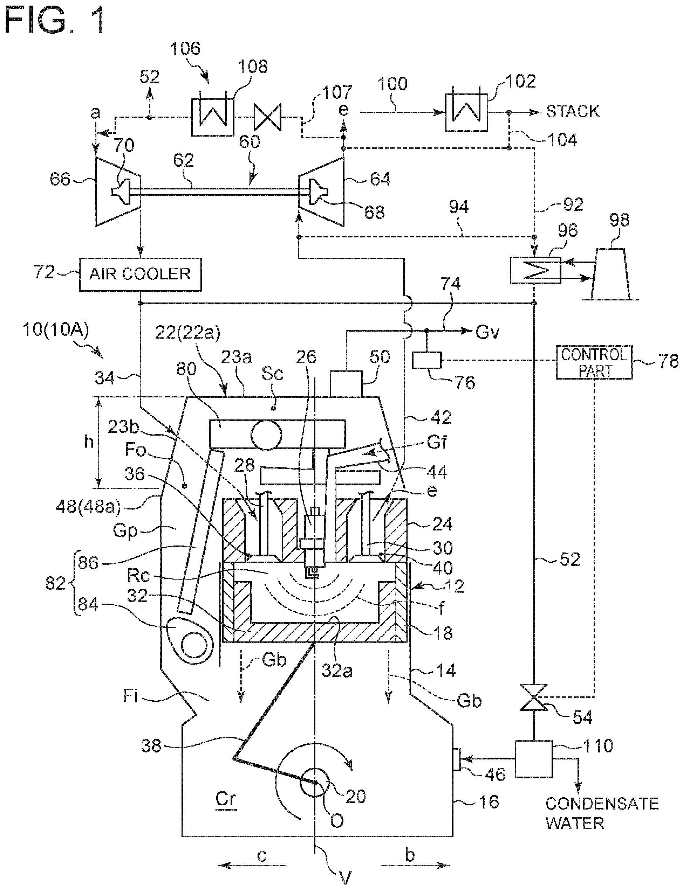

FIG. 1 is a longitudinal cross-sectional view of an internal combustion engine according to an embodiment. In FIG. 1, the internal combustion engine 10A according to an embodiment is an internal combustion engine capable of burning a fuel containing hydrogen gas, for example, a four-stroke engine applicable to gasoline engines, gas engines, and the like.

A cylinder block 12 of the internal combustion engine 10A comprises a cylinder housing part 14 which contains at least one cylinder 18, and a crankcase 16 disposed below the cylinder housing part 14. The crankcase 16 contains a crank shaft 20, which is disposed below the cylinder 18. A cylinder head 24 is disposed above the cylinder 18, and a rocker cover 22 is disposed above the cylinder head 24. The rocker cover 22 defines an upper space Sc between it and the cylinder block 12, which covers an upper portion of the cylinder head 24. The cylinder head 24 is provided with an ignition plug 26, an intake valve 28, and an exhaust valve 30, etc.

A cylinder chamber is formed inside the cylinder 18, and a piston 32 slides within the cylinder chamber. A crank chamber Cr is formed below the cylinder chamber. A combustion main chamber Rc is formed facing the top surface 32a of the piston 32, and combustion air is supplied from an intake pipe 34 to an intake port 36, as well as fuel Gf is supplied to the intake pipe 34 or directly to the combustion main chamber Rc through a fuel pipe 44 connected to the intake pipe 34 or the combustion main chamber Rc. In the ignition and combustion process, the ignition plug 26 ignites the gas mixture in the combustion main chamber Rc, causing a flame f to propagate, and in the expansion process, the piston 32 moves down the cylinder chamber. The reciprocating linear motion of the piston 32 is transmitted to the crank shaft 20 via a connecting rod 38, which rotates the crank shaft 20 in the direction of arrow. In the exhaust process, exhaust gas e is discharged from an exhaust port 40 to an exhaust pipe 42 connected to the exhaust port 40.

A later-described discharged gas Gv refers to a gas including ventilation gas, blow-by gas Gb, and steam gas, which will be described below, and is distinguished from the exhaust gas e.

In the embodiment illustrated in FIG. 1, the tip opening of the fuel pipe 44 is arranged to communicate with the combustion main chamber Rc so that fuel Gf is supplied directly to the combustion main chamber Rc.

However, in another embodiment, the fuel pipe 44 may be connected to the intake pipe 34 upstream from the intake port 36 so that fuel Gf is supplied to the intake pipe 34 upstream from the intake port 36.

The wall of the crankcase 16, which forms the crank chamber Cr inside, is provided with a ventilation gas inlet 46 so that ventilation gas can be introduced into the crank chamber Cr through the ventilation gas inlet 46. In addition, a gas passage forming part 48 is provided to form a gas passage Gp that connects the crank chamber Cr to the upper space Sc, and a discharged gas outlet 50 is formed in an upper portion of the rocker cover 22.

In such a configuration, during operation of the internal combustion engine 10A, blowby gas Gb leaks through the gap between the cylinder 18 and the piston 32 into the crank chamber Cr, so when the engine is operated with a fuel containing hydrogen gas, due to blowby gas Gb containing hydrogen gas, the hydrogen gas concentration in the crank chamber Cr gradually increases. In this regard, in the present embodiment, ventilation gas is introduced through the ventilation gas inlet 46 to dilute the hydrogen gas concentration, thereby reducing the hydrogen gas concentration in the crank chamber Cr below the lower limit of the flammable range. When the pressure in the crank chamber Cr is increased by introducing ventilation gas into the crank chamber Cr, the gas in the crank chamber Cr will flow through the gas passage Gp, which has relatively low pressure, to the upper space Sc. The gas that flows into the upper space Sc is discharged out of the rocker cover 22 through the discharged gas outlet 50.

Since hydrogen gas is lighter than other gases, hydrogen gas in the crank chamber Cr tends to accumulate at the top of the crank chamber Cr more easily than other gases.

In the embodiment illustrated in FIG. 1, the inlet opening Fi of the gas passage Gp opening to the crank chamber Cr is formed in the uppermost portion of the crank chamber Cr. Therefore, hydrogen gas flows into the gas passage Gp more easily than other gases. In the upper space Sc, similarly, hydrogen gas accumulates at the top of the upper space Sc and is thus efficiently discharged through the discharged gas outlet 50 formed in the upper portion of the rocker cover 22.

Thus, according to this embodiment, since hydrogen gas is lighter than other gases, the hydrogen gas mixed with other gases naturally moves to the upper space Sc due to buoyancy. This eliminates the need for installation of equipment such as a ventilation fan, as well as the installation space and required power, resulting in lower costs. In addition, the buoyancy of hydrogen gas in the upper space Sc allows hydrogen gas to be discharged out of the internal combustion engine 10A in preference to other gases, thus improving the ventilation efficiency of hydrogen gas compared to other gases.

In the case of the internal combustion engine 10A using an overhead valve type valve train, a casing for a power transmission device 82 (a device that transmits rotational motion of crank shaft 20 to valve drive device), which forms part of the valve train, is provided between the crankcase 16 and the rocker cover 22, as will be described below. In this case, the casing can be used as the gas passage forming part 48, eliminating the need for a new gas passage forming part 48 and further reducing costs.

Further, in this embodiment, the fuel pipe 44 is located in the upper space Sc, so even if fuel Gf leaks from the fuel pipe 44, the gasified fuel Gf can be discharged through the discharged gas outlet 50 along with a discharged gas Gv. Thus, it is possible to prevent ignition and combustion of the leaked fuel Gf.

In the embodiment shown in FIG. 1, the center axis O of the crank shaft 20 extends along the direction perpendicular to the paper. The internal combustion engine 10A includes a case with only one cylinder 18 and a case with multiple cylinders 18 arranged in the direction perpendicular to the paper.

In an embodiment, as shown in FIG. 1, the ventilation gas inlet 46 is formed on one side of the crankcase 16 with respect to a vertical plane V passing through the center axis O of the crank shaft 20. Specifically, in the embodiment illustrated in FIG. 1, the ventilation gas inlet 46 is formed on the side in the direction of arrow b with respect to the vertical plane V. For example, the ventilation gas inlet 46 may be formed outward of the cylinder 18. On the other hand, the gas passage forming part 48 is disposed on the side (other side) opposite to the one side of the crankcase 16 with respect to the vertical plane V. For example, the gas passage forming part 48 may be disposed outward of the cylinder 18. Specifically, in the embodiment illustrated in FIG. 1, the gas passage forming part 48 is formed on the side in the direction of arrow c with respect to the vertical plane V.

In the embodiment illustrated in FIG. 1, the vertical plane V is formed by a flat plane extending in the direction perpendicular to the paper on which FIG. 1 is illustrated.

According to this embodiment, since the ventilation gas inlet 46 and the gas passage forming part 48 are located on one side and the other side of the vertical plane V passing through the center axis O of the crank shaft 20, the ventilation gas introduced through the ventilation gas inlet 46 flows across the interior of the crank chamber Cr from one side of the vertical plane V to the other side. As a result, most of the gas accumulated in the crank chamber Cr can be efficiently ventilated without leaving behind any gas, so that the ventilation efficiency can be improved.

In the case of the internal combustion engine 10A with multiple cylinders 18, the ventilation gas inlet 46 may be provided in the crankcase 16 for each cylinder, or one for multiple cylinders. Also, the gas passage forming part 48 may form one gas passage Gp extending in the direction of arrangement of the cylinders so that the multiple cylinders share one gas passage forming part 48. In other words, one gas passage forming part 48 may be provided for multiple cylinders, or multiple compartmentalized gas passage forming parts 48 may be provided for corresponding cylinders.

The installation height of the ventilation gas inlet 46 and the height position of the inlet opening Fi of the gas passage forming part 48 in the crankcase 16 can be selected as desired.

In an embodiment, as shown in FIG. 1, the discharged gas outlet 50 is formed on one side of the rocker cover 22 with respect to the vertical plane V. Specifically, the discharged gas outlet 50 is formed on the side in the direction of arrow b with respect to the vertical plane V Accordingly, the gas flowing to the upper space Sc from the outlet opening Fo of the gas passage Gp formed in the gas passage forming part 48 flows from the other side to one side, i.e., across the upper space Sc in the direction of arrow b to the discharged gas outlet 50. As a result, the gas accumulated in the upper space Sc can be efficiently discharged through the discharged gas outlet 50, so that the ventilation efficiency of the upper space Sc can be improved.

In an embodiment, as shown in FIG. 1, the discharged gas outlet 50 is formed in the wall that forms the upper surface 23a of the rocker cover 22. Since hydrogen gas is lighter than other gases, it accumulates in an upper region of the upper space Sc in the rocker cover 22, i.e., in a region facing the back surface of the wall that forms the upper surface 23a. Because this region is close to the installation position of the discharged gas outlet 50, hydrogen gas is discharged through the discharged gas outlet 50 in preference to other gases.

In the embodiment illustrated in FIG. 1, the front and back surfaces of the wall that forms the upper surface 23a of the rocker cover 22a are flat surfaces extending in a substantially horizontal direction. Therefore, when the discharged gas Gv flows along the back surface of this wall in the direction of arrow b, the flow of the discharged gas Gv in the direction of arrow b is not obstructed because there are no protrusions on the back surface of the wall, allowing the gas to smoothly reach the discharged gas outlet 50.

Further, in the embodiment illustrated in FIG. 1, the rocker cover 22a has side surfaces 23b extending along the vertical direction, with both side surfaces 23b sloping downward to widen outward. The discharged gas outlet 50 may be formed in an upper region of the side surface 23b instead of the upper surface 23a. For example, the discharged gas outlet 50 may be formed in the range from the upper surface 23a to the height of h/3 of the side surface 23b, where h is the height of the side surface 23b along the vertical direction, as shown in FIG. 1.

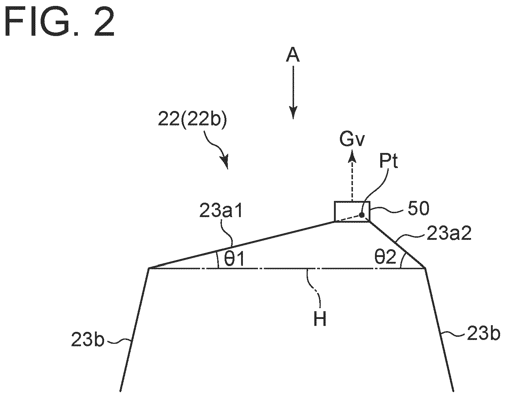

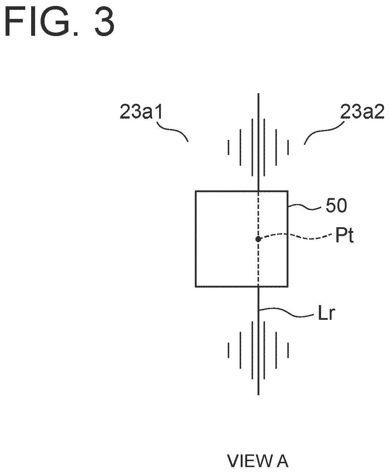

FIG. 2 is a schematic cross-sectional view showing another embodiment of the rocker cover 22. FIG. 3 is a schematic plan view seen from the direction A in FIG. 2.

In the rocker cover 22b shown in FIG. 2, the upper surface 23a includes inclined surfaces 23a1 and 23a2 that are inclined upward with respect to the horizontal direction. The discharged gas outlet 50 is formed in the uppermost portion where the inclined surfaces 23a1 and 23a2 intersect. Accordingly, hydrogen gas contained in the discharged gas Gv to be discharged through the discharged gas outlet 50 collects in a region facing the back surface of the wall that forms the uppermost portion. Since the discharged gas outlet 50 is formed in the uppermost portion, hydrogen gas collecting in the region near the uppermost portion can be efficiently discharged through the discharged gas outlet 50.

In the embodiment shown in FIGs. 2 and 3, the inclined surface 23a1 is inclined upward at an angle θ1 with respect to the horizontal plane H, and the inclined plane 23a2 is inclined upward at an angle θ2 with respect to the horizontal plane H. Lr indicates the ridge line where the inclined surface 23a1 and the inclined surface 23a2 intersect. That is, the uppermost points of the rocker cover 22 are on the ridge line Lr, and the point Pt represents one of the uppermost points of the rocker cover 22 on the ridge line Lr. As shown in FIG. 3, the uppermost point Pt is located inside the discharged gas outlet 50 in plan view.

In another embodiment, the side surface 23b and the inclined surface 23a2 may form a continuous flat surface (i.e., the angle formed by the side surface 23b and the inclined surface 23a2 may be 180°). Alternatively, the side surface 23b and the inclined surface 23a1 may form a continuous flat surface.

In still another embodiment, the inclined surfaces 23a1 and 23a2 may form curved surfaces rather than strictly flat surfaces (straight lines in the cross-section shown in FIG. 2).

In an embodiment, as shown in FIG. 1, a ventilation gas introduction path 52 is connected to the ventilation gas inlet 46. Ventilation gas can be introduced into the crank chamber Cr through the ventilation gas inlet 46 from the ventilation gas introduction path 52. The ventilation gas introduction path 52 is provided with a valve device 54, so that the flow rate of ventilation gas introduced from the ventilation gas introduction path 52 into the crank chamber Cr can be adjusted by the valve device 54. According to this embodiment, the flow rate of ventilation gas introduced into the crank chamber Cr can be adjusted by the valve device 54 to prevent the internal pressure of the crank chamber Cr from becoming excessive and the hydrogen gas concentration in the crank chamber Cr from reaching the flammable range.

The valve device 54 may be, for example, a flow regulating valve.

In another embodiment, the ventilation gas introduction path 52 may be connected to the intake pipe 34, and the discharged gas Gv discharged through the discharged gas outlet 50 may be introduced to the outside air a that is sucked into the inlet of a compressor 66.

In an embodiment, as shown in FIG. 1, the internal combustion engine 10A is equipped with a compressor 66, and the outside air a is sucked by the compressor 66 to produce compressed air. The compressed air produced by the compressor 66 passes through the intake pipe 34 and is supplied from the intake port 36 to the combustion main chamber Rc formed inside the cylinder 18. Part of the compressed air is used as ventilation gas, which flows through the ventilation gas introduction path 52 branching off from the intake pipe 34, and is supplied from the ventilation gas inlet 46 to the crank chamber Cr. The ventilation gas introduction path 52 may be provided with a differential pressure valve as needed to adjust the pressure of ventilation gas flowing through the ventilation gas introduction path 52 by the differential pressure valve.

The pressure in the crank chamber Cr changes in each process, such as full load and partial load, or compression process and expansion process of the piston 32. According to this embodiment, since the air compressed by the compressor 66 is introduced into the crank chamber Cr as ventilation gas, ventilation gas can be smoothly introduced into the crank chamber Cr even if pressure changes in the crank chamber Cr.

In the embodiment shown in FIG. 1, the internal combustion engine 10A is equipped with a turbocharger 60. The turbocharger 60 includes an exhaust gas turbine 64 at one end of a rotational shaft 62, and the exhaust gas turbine 64 has a turbine wheel 68 mounted on one end of the rotational shaft 62. The turbocharger 60 also includes a compressor 66 at the other end of the rotational shaft 62, and the compressor 66 has a compressor wheel 70 mounted on the other end of the rotational shaft 62. In the exhaust process, exhaust gas e discharged from the combustion main chamber Rc of the cylinder 18 is discharged through the exhaust port 40 to the exhaust pipe 42. The exhaust pipe 42 is connected to the exhaust gas turbine 64. Exhaust gas e discharged to the exhaust pipe 42 is introduced into the exhaust gas turbine 64, which rotates the turbine wheel 68. The rotation of the turbine wheel 68 rotates the rotational shaft 62 and the compressor wheel 70 mounted on the other end of the rotational shaft 62. The rotation of the compressor wheel 70 causes the outside air a to be sucked into the compressor 66 and compressed to produce compressed air.

The compressed air produced by the compressor 66 is cooled by an air cooler 72, and the cooled compressed air is supplied to the combustion main chamber Rc of the cylinder 18 through the intake pipe 34. Downstream of the air cooler 72, the ventilation gas introduction path 52 branches off from the intake pipe 34, and part of the cooled compressed air is diverted into the ventilation gas introduction path 52 to be used as ventilation gas.

According to this embodiment, the compressed air produced by the compressor 66, which is part of the turbocharger 60, is used as ventilation gas, eliminating the need for a new compressor and reducing costs. On the other hand, if the compressed air is used as ventilation gas at high temperatures, the temperature of the cylinder block 12 rises, degrading the lubricant and causing poor lubrication. Therefore, cooling the compressed air by the air cooler 72 avoids the risk of poor lubrication due to the increased temperature of the engine body.

In an embodiment, as shown in FIG. 1, a discharged gas discharge path 74 is connected to the discharged gas outlet 50, and the discharged gas Gv introduced into the upper space Sc of the rocker cover 22 via the gas passage Gp is discharged to the discharged gas discharge path 74. The discharged gas discharge path 74 is provided with a hydrogen concentration sensor 76, and the hydrogen concentration sensor 76 detects the concentration of hydrogen gas contained in the discharged gas Gv flowing through the discharged gas discharge path 74.

According to this embodiment, by detecting the hydrogen gas concentration in the discharged gas Gv discharged through the discharged gas outlet 50 by the hydrogen concentration sensor 76, it is possible to determine whether the hydrogen gas concentration in the discharged gas Gv is abnormal, i.e., whether it has reached the flammable range. Further, when the internal combustion engine 10A is an internal combustion engine having multiple cylinders 18, by providing the discharged gas discharge path 74 and the hydrogen concentration sensor 76 for each rocker cover 22 of each cylinder 18, the cylinder with abnormal hydrogen gas concentration in the discharged gas Gv can be identified from detected values of each hydrogen concentration sensor 76.

In an embodiment, as shown in FIG. 1, the internal combustion engine is equipped with a control part 78 into which a detected value of the hydrogen concentration sensor 76 is input. When the hydrogen concentration detected by the hydrogen concentration sensor 76 is more than or equal to the lower flammability limit, the control part 78 adjusts the opening degree of the valve device 54 so that the hydrogen concentration falls below the lower flammability limit. For example, the control part 78 may comprise a processor that is built into a computer or PC.

According to this embodiment, the control part 78 allows the hydrogen gas concentration in the discharged gas discharged through the discharged gas outlet 50 to be kept below the lower flammability limit at all times. This prevents combustion of the discharged gas Gv accumulated in the internal combustion engine 10A. Further, even if the discharged gas Gv leaks from the upper space Sc to the outside, there is no risk of abnormal combustion of the leaked discharged gas Gv because the hydrogen concentration of the discharged gas Gv is less than the lower flammability limit.

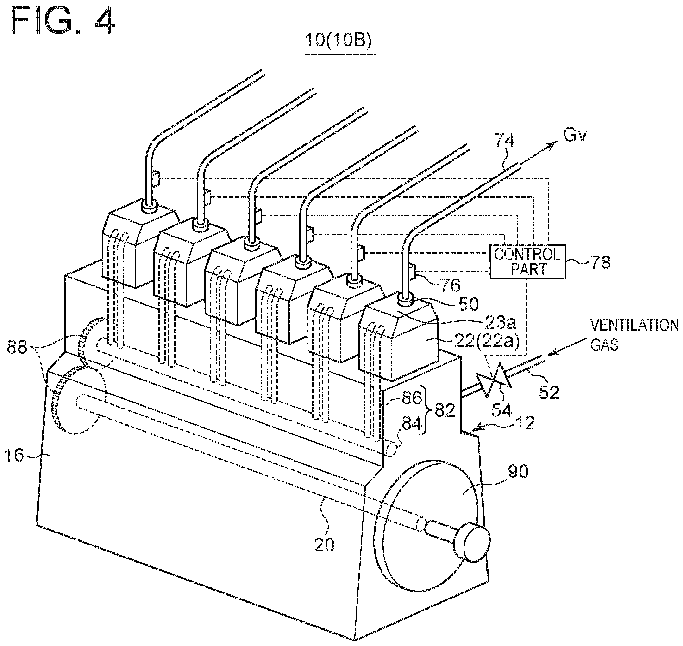

FIG. 4 shows an embodiment of an internal combustion engine with multiple cylinders. The internal combustion engine 10B according to this embodiment has independent rocker covers 22 for each cylinder, and the upper surface 23a of each rocker cover 22 (22a) extends along the horizontal direction. A discharged gas outlet 50 is formed in the upper surface 23a of each rocker cover 22, and a discharged gas discharge path 74 is connected to each discharged gas outlet 50. Each discharged gas discharge path 74 is provided with a hydrogen concentration sensor 76, and detected values of each hydrogen concentration sensor 76 is input to the control part 78. The control part 78 can determine which cylinder is experiencing abnormal hydrogen concentration from the detected values input from each hydrogen concentration sensor 76.

The internal combustion engine 10B illustrated in FIG. 4 has a common cylinder block 12 shared by the multiple rocker covers 22a. The cylinder block 12 includes a cylinder housing part 14 composed of a single casing, and one common crankcase 16 disposed below the cylinder housing part 14 and shared by the multiple cylinders. Although not shown in FIG. 4, one or more ventilation gas inlets 46 are formed in the crankcase 16, a ventilation gas introduction path 52 is connected to the ventilation gas inlet 46, and a valve device 54 is disposed in the ventilation gas introduction path 52. The control part 78 adjusts the opening degree of the valve device 54 of the cylinder whose detected value of the hydrogen concentration sensor 76 is more than or equal to the lower flammability limit so that the detected value falls below the lower flammability limit. This prevents combustion of the discharged gas Gv accumulated in the upper space Sc of the rocker cover 22 of the cylinder 18.

In an embodiment, a threshold is set for the hydrogen concentration value detected by the hydrogen concentration sensor 76, and when the detected hydrogen concentration exceeds the threshold, an alert is issued by an alarm or an emergency stop signal is sent from the control part 78.

In an embodiment, as shown in FIG. 1, a valve drive device 80 is disposed in the upper space Sc of the rocker cover 22. The valve drive device 80 drives the intake valve 28 and the exhaust valve 30. Further, a power transmission device 82 for transmitting rotational motion of the crank shaft 20 to the valve drive device 80 is disposed in the gas passage Gp formed in the gas passage forming part 48.

The power transmission device 82 includes, for example as shown in FIG. 1, a cam shaft 84 which rotates when the rotation of the crank shaft 20 is transmitted by a gear or other power transmission device, and a push rod 86 which converts the rotation of the cam shaft 84 into reciprocating linear motion and transmits it to the valve drive device 80. The above-described valve train is called the so-called overhead valve type.

According to this embodiment, in the overhead valve type internal combustion engine, the casing preinstalled for the power transmission device 82 can be used as the gas passage forming part 48. This eliminates the need for a new gas passage forming part 48, resulting in lower costs.

The valve train of the internal combustion engine 10B illustrated in FIG. 4 is of overhead valve type similar to the valve train of the internal combustion engine 10A shown in FIG. 1. The crank shaft 20 is provided with a flywheel 90 outside the crankcase 16, and the rotation of the crank shaft 20 is transmitted to the cam shaft 84 by a power transmission device such as gear 88. Two push rods 86, one for the intake valve and the other for the exhaust valve, are provided vertically above the cam shaft 84, and the cam shaft 84 reciprocates these two push rods 86 in the vertical direction.

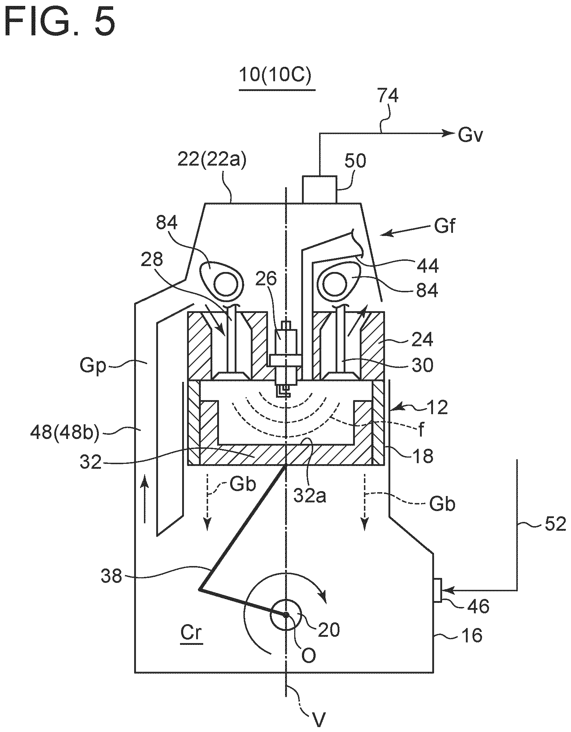

FIG. 5 is a longitudinal cross-sectional view of an internal combustion engine 10C according to still another embodiment. This embodiment has a type of valve drive device in which the cam shaft 84 is disposed in the upper space Sc in the rocker cover 22 and the intake valve 28 and the exhaust valve 30 are driven by the cam shaft 84. The power transmission device for transmitting rotational motion of the crank shaft 20 to the cam shaft 84 is composed of a cam chain disposed on an end portion of the crank shaft 20 in the extension direction of center axis O. This valve train is called the so-called overhead cam type. The overhead cam type internal combustion engine does not have a casing for housing the power transmission device on the side of the cylinder block 12 because the cam shaft 84 is disposed in the upper space Sc. Therefore, it is necessary to provide a new gas passage forming part 48b.

In FIG. 5, a ventilation gas supply system is not illustrated.

The internal combustion engine 10A illustrated in FIG. 1 is an overhead valve type internal combustion engine, and as the gas passage forming part 48a, a casing for housing the power transmission device 82 is integrally formed with the cylinder block 12 and the rocker cover 22 on the side of the cylinder block 12. Therefore, this casing can be used as the gas passage forming part 48.

On the other hand, in the overhead cam type internal combustion engine 10C shown in FIG. 5, the gas passage forming part 48b is a casing separately formed from the cylinder block 12 and the rocker cover 22, and this casing is attached to the cylinder block 12 and the rocker cover 22.

When the compressed air is cooled by the air cooler 72 as in the above-described embodiment, moisture in the compressed air may condense and form droplets, which may contaminate the lubricating oil in the crank chamber Cr or adhere to sliding parts, resulting in poor lubrication. These risks are especially heightened when the fuel contains hydrogen gas, because there is more water vapor in the exhaust gas e. Therefore, in another embodiment, a drain separator (not shown) is provided in the intake flow path downstream of the air cooler 72 formed by the intake pipe 34 so that moisture is removed from the cooled compressed air with the drain separator to reduce these risks.

In an embodiment, as shown in FIG. 1, an exhaust gas return path 92 is connected to the exhaust pipe 42. At least part of the exhaust gas e discharged to the exhaust pipe 42 is returned to the ventilation gas inlet 46 through the exhaust gas return path 92 and is used as ventilation gas in the crank chamber Cr. Since the exhaust gas e has low oxygen content and is more inert than air, the use thereof as ventilation gas reduces the risk of ignition in the crank chamber Cr. In addition, the exhaust gas e after combustion of a fuel containing hydrogen gas is free of soot, so it does not contaminate the lubricating oil. In addition, since the exhaust gas e discharged to the exhaust pipe 42 is pressurized, a compressor is not required to supply it to the crank chamber Cr as ventilation gas.

In an embodiment, as shown in FIG. 1, the exhaust gas e used as ventilation gas can be exhaust gas e extracted from downstream of the exhaust gas turbine 64 via the exhaust gas return path 92. In this case, the efficiency deterioration of the turbocharger 60 can be avoided.

In another embodiment, as shown in FIG. 1, the exhaust gas e extracted from upstream of the exhaust gas turbine 64 via an exhaust gas return path 94 can be used as ventilation gas.

In still another embodiment, as shown in FIG. 1, the exhaust gas return path 92 is provided with a heat exchanger 96 for cooling the exhaust gas e. Thus, since the exhaust gas e is cooled by the heat exchanger 96 and then used as ventilation gas, the volume of the exhaust gas e can be reduced and the capacity of the heat exchanger 96 can be reduced.

Further, in an embodiment, as shown in FIG. 1, the exhaust gas system (in FIG. 1, exhaust path 100 downstream of exhaust gas turbine 64) includes an exhaust gas boiler 102. In this embodiment, the exhaust gas e cooled in the exhaust gas boiler 102 is introduced into the crank chamber Cr via the exhaust paths 104, 92, heat exchanger 96, and ventilation gas introduction path 52 and used as ventilation gas. This allows a reduced capacity of the heat exchanger 96 and an improved thermal efficiency of the plant as a whole through the use of heat in the exhaust gas boiler 102.

In an embodiment, as shown in FIG. 1, the internal combustion engine is equipped with a cooling tower 98 for cooling cooling water used as a coolant for cooling the exhaust gas e in the heat exchanger 96. The cooling water cooled in the cooling tower 98 has a temperature of around 40°C, which improves the cooling efficiency of ventilation gas.

The temperature of ventilation gas cooled by the heat exchanger 96 should be between 60 and 80°C. If the temperature of ventilation gas is below this temperature range, oil mist in the exhaust gas e adheres to the inner surface of the pipes or other components of the ventilation gas introduction path 52, deteriorating the flow of ventilation gas through the pipes and causing a risk of clogging in the pipes. Conversely, if this temperature range is exceeded, cooling of the cylinder block 12 is inhibited and combustion chamber parts such as the piston 32 and cylinder liner become hot, which may cause liner scuffing or other damage. By setting the temperature of ventilation gas in the above temperature range, these problems can be eliminated.

In an embodiment, when the exhaust gas e is extracted from the exhaust gas return path 94 upstream of the exhaust gas turbine 64 and used as ventilation gas, part of the exhaust gas e extracted upstream of the heat exchanger 96 is released into the exhaust pipe 42 downstream of the exhaust gas turbine 64 through the exhaust gas return path 92. By doing this when the pressure in the crank chamber Cr is high, the flow rate of ventilation gas supplied to the crank chamber Cr can be reduced, so that the pressure in the crank chamber Cr can be prevented from increasing.

In an embodiment, as shown in FIG. 1, the internal combustion engine is equipped with an EGR system 106 for returning part of the exhaust gas e discharged from the cylinder 18 to the exhaust pipe 42 to the intake line. The EGR system 106 includes an EGR path 107 connected to the exhaust pipe 42 and the outside air inlet, and an EGR cooler 108 disposed in the EGR path 107. The EGR path 107 is connected to the ventilation gas introduction path 52 downstream of the EGR cooler 108. Part of the exhaust gas e cooled by the EGR cooler 108 is extracted and supplied to the crank chamber Cr as ventilation gas through the ventilation gas introduction path 52. According to this embodiment, the exhaust gas e cooled by the EGR cooler 108 can be used for ventilation of the crank chamber Cr without the need for an additional heat exchanger.

In the embodiment illustrated in FIG. 1, the EGR path 107 is connected to the exhaust pipe 42 downstream of the exhaust gas turbine 64 and the outside air inlet of the compressor 66, but it may be connected to the exhaust pipe 42 upstream of the exhaust gas turbine 64 and the intake pipe 34 downstream of the compressor 66.

In addition, the embodiment illustrated in FIG. 1 is equipped with a drain separator 110 downstream of the heat exchanger 96 in the ventilation gas introduction path 52. By removing condensate water from the ventilation gas supplied to the crank chamber Cr, the risk of damage to the internal combustion engine 10A caused by problems such as poor lubrication can be reduced.

The contents described in the above embodiments would be understood as follows, for instance.
1) An internal combustion engine according to one aspect is an internal combustion engine (10) capable of burning a fuel (Gf) containing hydrogen gas, including: a cylinder block (12) containing at least one cylinder (18) and including a crankcase (16) which contains a crank shaft (20) disposed below the cylinder (18); a rocker cover (22) which defines an upper space (Sc) covering an upper portion of a cylinder head (24) disposed above the cylinder block (12); a ventilation gas inlet (46) formed in the crankcase (16); a gas passage forming part (48) which forms a gas passage (Gp) connecting a crank chamber (Cr) of the crankcase (16) and the upper space (Sc) of the rocker cover (22); and a discharged gas outlet (50) formed in an upper portion of the rocker cover (22).

With this configuration, since the pressure in the crank chamber (Cr) is increased by ventilation gas introduced into the crank chamber (Cr) through the ventilation gas inlet (46), the gas including blow-by gas (Gb) accumulated in the crank chamber (Cr) flows into the gas passage (Gp) formed by the gas passage forming part (48) and rises, and further flows through the gas passage forming part (48) into the upper space (Sc) defined inside the rocker cover (22). Since hydrogen gas contained in the gas that flows into the upper space (Sc) is lighter than other gases, it accumulates at the top of the upper space (Sc). Accordingly, it is efficiently discharged through the discharged gas outlet (50) formed in the upper portion of the rocker cover (22). This eliminates the need for a ventilation device that requires power, such as ventilation fans, allowing for a reduction in the installation space and power of ventilation device, resulting in lower costs. Furthermore, when the fuel pipe (44) for supplying the fuel (Gf) to the cylinder (18) is located in the upper space (Sc), even if fuel leakage occurs from the fuel pipe (44), the leaked fuel gas can be discharged through the discharged gas outlet (50) along with other discharged gases, thus preventing the fuel (Gf) from igniting in the upper space (Sc).

2) An internal combustion engine according to another aspect is the internal combustion engine as described in 1) in which the ventilation gas inlet (46) is formed on one side of the crankcase (16) with respect to a vertical plane (V) passing through a center axis (O) of the crank shaft (20), and the gas passage forming part (48) is disposed on a side opposite to the one side with respect to the vertical plane (V).

With this configuration, since the ventilation gas inlet (46) and the gas passage forming part (48) are located on opposite sides of the vertical plane (V) passing through the center axis (O) of the crank shaft (20), the ventilation gas introduced through the ventilation gas inlet (46) into the crankcase (16) flows across the interior of the crank chamber (Cr) from one side of the vertical plane (V) to the other side. As a result, the gas accumulated in the crank chamber (Cr) can be efficiently ventilated, so that the ventilation efficiency can be improved.

3) An internal combustion engine according to still another aspect is the internal combustion engine as described in 2) in which the discharged gas outlet (50) is formed on the one side of the rocker cover (22) with respect to the vertical plane (V).

With this configuration, the gas that flows out from the gas passage forming part (48) into the upper space (Sc) in the rocker cover (22) flows to the discharged gas outlet (50) across the upper space (Sc) from the other side to one side of the vertical plane (V) through the center axis (O) of the crank shaft (20). As a result, the gas accumulated in the upper space (Sc) can be efficiently ventilated, so that the ventilation efficiency can be improved.

(4) An internal combustion engine according to still another aspect is the internal combustion engine as described in any one of 1) to 3) in which the discharged gas outlet (50) is formed in an upper surface of the rocker cover (22).

With this configuration, since the discharged gas outlet (50) is formed in the upper surface of the rocker cover (22), hydrogen gas accumulated at the top of the upper space (Sc) can be efficiently discharged through the discharged gas outlet (50), so that the ventilation efficiency of hydrogen gas can be improved.

5) An internal combustion engine according to still another aspect is the internal combustion engine as described in 4) in which the upper surface (23a) of the rocker cover (22 (22b)) includes an inclined surface (23a1, 23a2), and the discharged gas outlet (50) is formed in an uppermost portion (Pt) of the inclined surface (23a1, 23a2).

With this configuration, hydrogen gas, which is lighter than other gases, collects in the uppermost portion (Pt) of the inclined surface (23a1, 23a2) along the inner surface of the wall that forms the inclined surface (23a1, 23a2). Accordingly, hydrogen gas can be efficiently discharged through the discharged gas outlet (50) in the uppermost portion (Pt).

6) An internal combustion engine according to still another aspect is the internal combustion engine as described in any one of 1) to 5) which includes: a ventilation gas introduction path (52) connected to the ventilation gas inlet (46) and capable of introducing ventilation gas to the crank chamber (Cr) through the ventilation gas inlet (46); and a valve device (54) disposed in the ventilation gas introduction path (52) and capable of adjusting flow rate of the ventilation gas.

With this configuration, the flow rate of ventilation gas introduced into the crank chamber (Cr) can be adjusted by the valve device (54) to prevent the internal pressure of the crank chamber (Cr) from becoming excessive and the hydrogen gas concentration in the gas in the crank chamber (Cr) from reaching the flammable range.

7) An internal combustion engine according to still another aspect is the internal combustion engine as described in 6) which further includes a compressor device (66) for producing compressed air supplied to the internal combustion engine (10). Part of the compressed air produced by the compressor device (66) is introduced to the ventilation gas introduction path (52) as the ventilation gas.

With this configuration, since part of the compressed air produced by the compressor (66) is introduced to the ventilation gas introduction path (52) as ventilation gas, ventilation gas can be smoothly introduced into the crank chamber (Cr) even if pressure changes in the crank chamber (Cr) to some extent. Further, if the internal combustion engine (10) is equipped with a turbocharger (60), a compressor device (66) that forms part of the turbocharger (60) can be used as the compressor device. Therefore, there is no need to install a new compressor device.

8) An internal combustion engine according to still another aspect is the internal combustion engine as described in 6) or 7) which further includes: a discharged gas discharge path (74) connected to the discharged gas outlet (50) and capable of discharging a discharged gas (Gv) containing the ventilation gas that is introduced to the upper space (Sc) of the rocker cover (22) through the gas passage (Gp); and a hydrogen concentration sensor (76) disposed in the discharged gas discharge path (74) and configured to detect hydrogen gas concentration contained in the discharged gas (Gv).

With this configuration, by detecting the hydrogen gas concentration in the discharged gas (Gv) discharged through the discharged gas outlet (50) by the hydrogen concentration sensor (76), it is possible to determine whether the hydrogen gas concentration is abnormal, i.e., it has reached the flammable range. Further, if the internal combustion engine (10) has multiple cylinders (18), the cylinder (18) in the abnormal state can be identified from the hydrogen gas concentration in the exhaust gas (e) discharged from each cylinder (18).

9) An internal combustion engine according to still another aspect is the internal combustion engine as described in 8) which further includes: a control part (78) configured to control opening degree of the valve device (54) so that a detected value of the hydrogen concentration sensor is less than a lower flammability limit.

With this configuration, by adjusting the opening degree of the valve device (54) by the control part (78) to control the flow rate of ventilation gas introduced into the crank chamber (Cr), the hydrogen gas concentration in the discharged gas (Gv) discharged through the discharged gas outlet (50) can be kept below the lower flammability limit. This prevents the hydrogen gas concentration inside the internal combustion engine (10) from reaching the flammable range and causing ignition or combustion.

10) An internal combustion engine according to still another aspect is the internal combustion engine as described in any one of 1) to 9) which includes: a valve drive device (80) disposed in the upper space (Sc) of the rocker cover (22) and configured to drive an intake valve (28) and an exhaust valve (30); and a power transmission device (82) disposed in the gas passage (Gp) and configured to transmit rotational motion of the crank shaft (20) to the valve drive device (80).

With this configuration, a casing preinstalled for the power transmission device (82) can be used as the gas passage forming part (48). This eliminates the need for a new gas passage forming part (48), resulting in lower costs.

11) An internal combustion engine according to still another aspect is the internal combustion engine as described in 1) which includes: an exhaust path (42) through which exhaust gas (e) from the internal combustion engine (10) is discharged; and an exhaust gas return path (92) connected to the exhaust path (42) for supplying at least part of the exhaust gas (e) to the ventilation gas inlet (46).

With this configuration, since the exhaust gas (e) of low oxygen content is more inert than air, the use thereof as ventilation gas reduces the risk of ignition in the crank chamber (Cr) or the like. In addition, the exhaust gas (e) after combustion of a fuel containing hydrogen gas is free of soot, so it does not contaminate the lubricating oil. Furthermore, since the exhaust gas (e) discharged to the exhaust path (42) is pressurized, a compressor is not required to supply it to the crank chamber (Cr) as ventilation gas.

12) An internal combustion engine according to still another aspect is the internal combustion engine as described in 11) which includes a heat exchanger (96) for cooling the exhaust gas (e) flowing through the exhaust gas return path (92).

With this configuration, since the exhaust gas (e) flowing through the exhaust gas return path (92, 94) can be cooled by the heat exchanger (96) and then used as ventilation gas, the volume of the exhaust gas (e) can be reduced and the capacity of the heat exchanger (96) can be reduced.

13) An internal combustion engine according to still another aspect is the internal combustion engine as described in 12) which includes a cooling tower (98) for cooling cooling water used as a coolant for cooling the exhaust gas (e) in the heat exchanger (96). The exhaust gas (e) is cooled with the cooling water to a temperature between 60°C and 80°C in the heat exchanger (96).

With this configuration, the cooling water cooled in the cooling tower (98) has a temperature of around 40°C, which improves the cooling efficiency of ventilation gas. If the temperature of ventilation gas is below this temperature range, oil mist in the exhaust gas (e) adheres to the inner surface of the pipes or other components of the ventilation gas introduction path (52), deteriorating the flow of ventilation gas through the pipes and causing a risk of clogging in the pipes. Conversely, if this temperature range is exceeded, cooling of the cylinder block (12) is inhibited and combustion chamber parts such as the piston (32) and cylinder liner become hot, which may cause liner scuffing or other damage.

14) An internal combustion engine according to still another aspect is the internal combustion engine as described in 1) which includes: an exhaust gas turbine (64) driven by exhaust gas (e) discharged from the internal combustion engine (10). At least part of the exhaust gas (e) discharged from the exhaust gas turbine (64) is introduced to the ventilation gas inlet (46).

With this configuration, the flow rate of exhaust gas (e) flowing into the exhaust gas turbine (64) can be secured, so that the efficiency deterioration of the turbocharger (60) including the exhaust gas turbine (64) can be avoided.

15) An internal combustion engine according to still another aspect is the internal combustion engine as described in 7) which includes: an intake path (34) through which the compressed air is supplied from the compressor device (66) to the internal combustion engine (10); an air cooler (72) disposed in the intake path (34); and a drain separator disposed downstream of the air cooler (72) in the intake path (34).

When the compressed air is cooled by the air cooler (72), moisture in the compressed air may condense and form droplets, which may contaminate the lubricating oil in the crank chamber (Cr) or adhere to sliding parts, resulting in poor lubrication. These risks are especially heightened when the fuel contains hydrogen gas, because there is more water vapor in the exhaust gas (e). Therefore, according to the above aspect, a drain separator is provided downstream of the air cooler (72) so that moisture is removed from the cooled compressed air with the drain separator to reduce these risks.

### Reference Signs List

10 (10A, 10B, 10C) Internal combustion engine
12 Cylinder block
14 Cylinder housing part
16 Crankcase
18 Cylinder
20 Crank shaft
22 (22a, 22b) Rocker cover
23a Upper surface
23a1, 23a2 Inclined surface
23b Side surface
24 Cylinder head
26 Ignition plug
28 Intake valve
30 Exhaust valve
32 Piston
32a Top surface
34 Intake pipe
36 Intake port
38 Connecting rod
40 Exhaust port
42 Exhaust pipe
44 Fuel pipe
46 Ventilation gas inlet
48 (48a, 48b) Gas passage forming part
50 Discharged gas outlet
52 Ventilation gas introduction path
54 Valve device
60 Turbocharger
62 Rotational shaft
64 Exhaust gas turbine
66 Compressor
68 Turbine wheel
70 Compressor wheel
72 Air cooler
74 Discharged gas discharge path
76 Hydrogen concentration sensor
78 Control part
80 Valve drive device
82 Power transmission device
84 Cam shaft
86 Push rod
88 Gear
90 Flywheel
92, 94 Exhaust gas return path
96 Heat exchanger
98 Cooling tower
100, 104 Exhaust path
102 Exhaust gas boiler
106 EGR system
107 EGR path
108 EGR cooler
110 Drain separator
Cr Crank chamber
Fi Inlet opening
Fo Outlet opening
Gb Blow-by gas
Gf Fuel
Gp Gas passage
Gv Discharged gas
H Horizontal plane
Lr Ridge line
O Center axis
Pt Uppermost point
Rc Combustion main chamber
Sc Upper space
V Vertical plane
a Outer air
e Exhaust gas

## Claims

1. An internal combustion engine capable of burning a fuel containing hydrogen gas, comprising:
a cylinder block containing at least one cylinder and including a crankcase which contains a crank shaft disposed below the cylinder;
a rocker cover which defines an upper space covering an upper portion of a cylinder head disposed above the cylinder block;
a ventilation gas inlet formed in the crankcase;
a gas passage forming part which forms a gas passage connecting a crank chamber of the crankcase and the upper space of the rocker cover; and
a discharged gas outlet formed in an upper portion of the rocker cover.

2. The internal combustion engine according to claim 1,
wherein the ventilation gas inlet is formed on one side of the crankcase with respect to a vertical plane passing through a center axis of the crank shaft, and
wherein the gas passage forming part is disposed on a side opposite to the one side with respect to the vertical plane.

3. The internal combustion engine according to claim 2,
wherein the discharged gas outlet is formed on the one side of the rocker cover with respect to the vertical plane.

4. The internal combustion engine according to any one of claims 1 to 3,
wherein the discharged gas outlet is formed in an upper surface of the rocker cover.

5. The internal combustion engine according to claim 4,
wherein the upper surface of the rocker cover includes an inclined surface, and
wherein the discharged gas outlet is formed in an uppermost portion of the inclined surface.

6. The internal combustion engine according to any one of claims 1 to 5, comprising:
a ventilation gas introduction path connected to the ventilation gas inlet and capable of introducing ventilation gas to the crank chamber through the ventilation gas inlet; and
a valve device disposed in the ventilation gas introduction path and capable of adjusting flow rate of the ventilation gas.

7. The internal combustion engine according to claim 6, further comprising a compressor device for producing compressed air supplied to the internal combustion engine,
wherein part of the compressed air produced by the compressor device is introduced to the ventilation gas introduction path as the ventilation gas.

8. The internal combustion engine according to claim 6 or 7, further comprising:
a discharged gas discharge path connected to the discharged gas outlet and capable of discharging a discharged gas containing the ventilation gas that is introduced to the upper space of the rocker cover through the gas passage; and
a hydrogen concentration sensor disposed in the discharged gas discharge path and configured to detect hydrogen gas concentration contained in the discharged gas.

9. The internal combustion engine according to claim 8, further comprising a control part configured to control opening degree of the valve device so that a detected value of the hydrogen concentration sensor is less than a lower flammability limit.

10. The internal combustion engine according to any one of claims 1 to 9, comprising:
a valve drive device disposed in the upper space of the rocker cover and configured to drive an intake valve and an exhaust valve; and
a power transmission device disposed in the gas passage and configured to transmit rotational motion of the crank shaft to the valve drive device.

11. The internal combustion engine according to claim 1, comprising:
an exhaust path through which exhaust gas from the internal combustion engine is discharged; and
an exhaust gas return path connected to the exhaust path for supplying at least part of the exhaust gas to the ventilation gas inlet.

12. The internal combustion engine according to claim 11, comprising a heat exchanger for cooling the exhaust gas flowing through the exhaust gas return path.

13. The internal combustion engine according to claim 12, comprising a cooling tower for cooling cooling water used as a coolant for cooling the exhaust gas in the heat exchanger,
wherein the exhaust gas is cooled with the cooling water to a temperature between 60°C and 80°C in the heat exchanger.

14. The internal combustion engine according to claim 1, comprising an exhaust gas turbine driven by exhaust gas discharged from the internal combustion engine,
wherein at least part of the exhaust gas discharged from the exhaust gas turbine is introduced to the ventilation gas inlet.

15. The internal combustion engine according to claim 7, comprising:
an intake path through which the compressed air is supplied from the compressor device to the internal combustion engine;
an air cooler disposed in the intake path; and
a drain separator disposed downstream of the air cooler in the intake path.
